# EUROPEAN PATENT APPLICATION

(11) **EP 4 843 955 A1**
(43) Date of publication of application: **25.11.2026**
(21) Application number: 25742026.5
(22) Date of filing: 17.01.2025
(51) Int. Cl.: C01D 15/08, B01D 61/02, C22B 3/22, C22B 3/44, C22B 7/00, C22B 26/12, H01M 10/54

(54) **METHOD FOR PRODUCING PURIFIED LITHIUM CARBONATE**

(30) Priority: 19.01.2024 JP 2024006655; 19.01.2024 JP 2024006659; 19.01.2024 JP 2024006790
(71) Applicant: Mitsubishi Materials Corporation, Tokyo 100-8117 (JP)
(72) Inventor: MURAOKA, Shu, Iwaki-shi, Fukushima 971-8101 (JP); HAYASHI, Hiroshi, Tokyo 100-8117 (JP); SATO, Ryosuke, Iwaki-shi, Fukushima 971-8101 (JP)
(74) Representative: Gille Hrabal Partnerschaftsgesellschaft mbB Patentanwälte
(86) International application number: PCT/JP2025/001372
(87) International publication number: WO 2025/154801

(57) **Abstract**

This method for producing purified lithium carbonate (S05) includes: a slurrying step (S51) of adding water to lithium carbonate containing 400 mass ppm or more of calcium to produce a lithium carbonate slurry; a bicarbonation step (S52) of blowing CO₂ gas into the lithium carbonate slurry to generate lithium bicarbonate and obtain a lithium bicarbonate liquid; a first solid-liquid separation step (S53) of separating calcium carbonate suspended in the lithium bicarbonate liquid; a purified lithium carbonate crystallization step (S54) of heating the lithium bicarbonate liquid after removal of the calcium carbonate, decomposing the lithium bicarbonate, and depositing purified lithium carbonate; a second solid-liquid separation step (S55) of separating the deposited purified lithium carbonate from a mother liquor; and a mother liquor return step (S56) of returning the mother liquor obtained in the second solid-liquid separation step (S55) to the slurrying step (S51).

## Description

### TECHNICAL FIELD

The present invention relates to a method for producing purified lithium carbonate, which is a method for obtaining purified lithium carbonate having a higher purity from lithium carbonate containing impurities such as calcium.

The present application claims priority on Japanese Patent Application No. 2024-006655 filed on January 19, 2024, Japanese Patent Application No. 2024-006659 filed on January 19, 2024, and Japanese Patent Application No. 2024-006790 filed on January 19, 2024, the contents of which are incorporated herein by reference.

### BACKGROUND ART

In recent years, lithium has been recovered and reused from lithium-containing substances such as a pulverized product of a lithium-ion battery.

As a method of recovering lithium from a lithium-containing substance, a method of leaching lithium into an acidic solution by immersing battery scraps obtained by roasting a lithium ion battery waste in an acidic solution and recovering lithium from an obtained lithium leachate is known.

The lithium leachate in which lithium is leached also contains metals other than lithium, such as cobalt and aluminum. Therefore, for example, as disclosed in Patent Document 1, the lithium leachate is neutralized by adding a calcium salt thereto, whereby mainly metals other than lithium precipitate, and the lithium solution is further separated from other substances by solid-liquid separation. Next, carbonic acid is added to the lithium solution to recover lithium as lithium carbonate.

Here, when lithium purity of the recovered lithium carbonate is insufficient, the lithium carbonate may be purified in order to improve the lithium purity. For example, Patent Document 1 proposes a method for purifying lithium carbonate, the method including a step of bringing lithium carbonate into contact with water or an acidic solution, supplying carbonate ions to the water or the acidic solution, and reacting the generated carbonic acid with the lithium carbonate to dissolve the lithium carbonate as soluble lithium bicarbonate, and a step of heat-treating the obtained lithium bicarbonate liquid to release carbonic acid and deposit and recover high-purity purified lithium carbonate.

### Citation List

### Patent Document

Patent Document 1: Japanese Unexamined Patent Application, First Publication No. 2019-026531

### SUMMARY OF INVENTION

### Technical Problem

Meanwhile, as disclosed in Patent Document 1, when the lithium bicarbonate liquid is heat-treated to release carbonic acid and deposit lithium carbonate, lithium remains in the mother liquor after solid-liquid separation of the lithium carbonate, resulting in a problem that lithium cannot be sufficiently recovered.

In addition, when lithium carbonate containing calcium as an impurity is purified, there is a concern that calcium may be mixed as an impurity even after the lithium carbonate is purified.

The present invention has been made in view of the above-described circumstances, and an objective of the present invention is to provide a method for producing purified lithium carbonate, the method being capable of efficiently recovering lithium and obtaining purified lithium carbonate having a sufficiently high purity. Solution to Problem

In order to solve the above-described problem, a method for producing purified lithium carbonate according to an aspect 1 of the present invention includes: a slurrying step of adding water to lithium carbonate containing 400 mass ppm or more of calcium to produce a lithium carbonate slurry; a bicarbonation step of blowing CO₂ gas into the lithium carbonate slurry to generate soluble lithium bicarbonate and obtain a lithium bicarbonate liquid; a first solid-liquid separation step of separating calcium carbonate suspended in the lithium bicarbonate liquid; a purified lithium carbonate crystallization step of heating the lithium bicarbonate liquid after removal of the calcium carbonate, decomposing the lithium bicarbonate, and depositing purified lithium carbonate; a second solid-liquid separation step of separating the deposited purified lithium carbonate from a mother liquor; and a mother liquor return step of returning the mother liquor obtained in the second solid-liquid separation step to the slurrying step.

With the method for producing purified lithium carbonate according to the aspect 1 of the present invention, the method includes the purified lithium carbonate crystallization step of heating the lithium bicarbonate liquid after removal of the calcium carbonate, decomposing the lithium bicarbonate, and depositing purified lithium carbonate, the second solid-liquid separation step of separating the deposited purified lithium carbonate from a mother liquor, and the mother liquor return step of returning the mother liquor obtained in the second solid-liquid separation step to the slurrying step. Therefore, lithium remaining in the mother liquor can be incorporated into the lithium carbonate slurry serving as a raw material, and lithium recovery efficiency can be improved.

In addition, the method includes the bicarbonation step of blowing CO₂ gas into the lithium carbonate slurry to generate soluble lithium bicarbonate and obtain a lithium bicarbonate liquid, and the first solid-liquid separation step of separating calcium carbonate suspended in the lithium bicarbonate liquid. Therefore, calcium can be efficiently removed, and purified lithium carbonate having a high purity can be produced.

A method for producing purified lithium carbonate according to an aspect 2 of the present invention is characterized in that, in the method for producing purified lithium carbonate according to the aspect 1, a liquid temperature in the purified lithium carbonate crystallization step is within a range of 85°C or higher and 98°C or lower.

With the method for producing purified lithium carbonate according to the aspect 2 of the present invention, because the liquid temperature in the purified lithium carbonate crystallization step is within a range of 85°C or higher and 98°C or lower, the lithium bicarbonate can be efficiently decomposed, and deposition of purified lithium carbonate can be promoted.

A method for producing purified lithium carbonate according to aspect 3 of the present invention is characterized in that, in the method for producing purified lithium carbonate according to the aspect 1 or 2, a concentration of the lithium carbonate in the lithium carbonate slurry produced in the slurrying step is within a range of 30 g/L or more and 45 g/L or less.

With the method for producing purified lithium carbonate according to the aspect 3 of the present invention, because the concentration of the lithium carbonate in the lithium carbonate slurry is within a range of 30 g/L or more and 45 g/L or less, it is possible to sufficiently generate lithium bicarbonate in the bicarbonation step and to prevent lithium carbonate from remaining, and purified lithium carbonate can be produced more efficiently.

A method for producing purified lithium carbonate according to an aspect 4 of the present invention is characterized in that, in the method for producing purified lithium carbonate according to any one of the aspects 1 to 3, a pH in the bicarbonation step is 7.5 or more.

With the method for producing purified lithium carbonate according to the aspect 4 of the present invention, because the pH in the bicarbonation step is 7.5 or more, calcium contamination in the bicarbonation step can be suppressed, and purified lithium carbonate having a higher purity can be produced. In addition, in the bicarbonation step, since the pH decreases as CO₂ gas is blown in, blowing of the CO₂ gas is stopped when the pH reaches 7.5, and the amount of CO₂ gas used can be reduced.

A method for producing purified lithium carbonate according to an aspect 5 of the present invention is characterized in that, in the method for producing purified lithium carbonate according to any one of the aspects 1 to 4, a liquid temperature in the bicarbonation step is 30°C or lower.

With the method for producing purified lithium carbonate according to the aspect 5 of the present invention, because the liquid temperature in the bicarbonation step is 30°C or lower, generation of scales in the bicarbonation step can be suppressed, and a lithium bicarbonate liquid can be stably obtained.

A method for producing purified lithium carbonate according to an aspect 6 of the present invention is characterized in that, in the method for producing purified lithium carbonate according to any one of the aspects 1 to 5, CO₂ gas released from the lithium bicarbonate in the purified lithium carbonate crystallization step is used in the bicarbonation step.

With the method for producing purified lithium carbonate according to the aspect 6 of the present invention, because CO₂ gas released from the lithium bicarbonate in the purified lithium carbonate crystallization step is used in the bicarbonation step, the amount of CO₂ gas used can be suppressed, and the operating cost can be reduced.

### Advantageous Effects of Invention

According to the aspects of the present invention, it is possible to provide a method for producing purified lithium carbonate, the method being capable of efficiently recovering lithium and obtaining purified lithium carbonate having a sufficiently high purity.

### BRIEF DESCRIPTION OF DRAWINGS

[FIG. 1] A flowchart representing a lithium recovery method using the method for producing purified lithium carbonate according to the embodiment of the present invention.
[FIG. 2] A flowchart representing the impurity removal step in FIG. 1.
[FIG. 3] A flowchart representing the lithium-containing liquid concentration step in FIG. 1.
[FIG. 4] A flowchart representing the lithium carbonate production step in FIG. 1.
[FIG. 5] A flowchart representing the method for producing purified lithium carbonate according to the embodiment of the present invention, the method being applied as the lithium carbonate purification step in FIG. 1.
[FIG. 6] A graph representing a relationship between a pH of a liquid and a lithium concentration in the liquid in a bicarbonation step.

### DESCRIPTION OF EMBODIMENTS

Hereinafter, a method for producing purified lithium carbonate according to an embodiment of the present invention will be described with reference to the drawings. Note that each of the embodiments shown below is specifically described for better understanding of the features of the invention, and does not limit the present invention unless otherwise specified. In addition, "solution" described in the specification is an aqueous solution.

The method for producing purified lithium carbonate according to the present embodiment is applicable to, for example, a process of recovering lithium from a lithium-containing substance such as a pulverized product of a discarded lithium-ion battery.

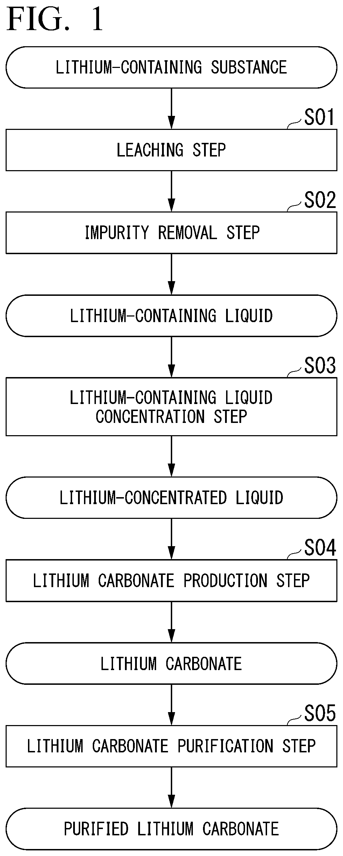

First, a lithium recovery method to which the method for producing purified lithium carbonate according to the present embodiment is applied will be described with reference to FIG. 1.

As shown in FIG. 1, the lithium recovery method includes a leaching step S01, an impurity removal step S02, a lithium-containing liquid concentration step S03, a lithium carbonate production step S04, and a lithium carbonate purification step S05.

### (Leaching step S01)

In the leaching step S01, a lithium-containing substance such as a pulverized product of a lithium-ion battery is immersed in an acidic solution to leach lithium into the acidic solution; and thereby, a lithium leachate (Li leachate) is obtained. As the acidic solution, for example, inorganic acids such as hydrochloric acid, sulfuric acid, and nitric acid can be used alone, or a mixture of two or more inorganic acids can be used.

In the present embodiment, sulfuric acid is used as the acid. In the present embodiment, the lithium-containing substance and the sulfuric acid are mixed and stirred (stirring time: 30 minutes or longer and 20 hours or shorter) to dissolve lithium in the lithium-containing substance; and thereby, the lithium leachate is obtained.

A pH of the lithium leachate is not particularly limited, and is, for example, 1.0 or more and 2.0 or less. In addition, metals other than lithium, fluorine, and the like are also leached into the leachate. The metals contained in the leachate differ depending on the lithium-containing substance to be used, and examples thereof include cobalt, nickel, and manganese, which are used as a positive electrode active material; and copper, aluminum, and iron, which are used as a current collector or an exterior material of a battery.

### (Impurity removal step S02)

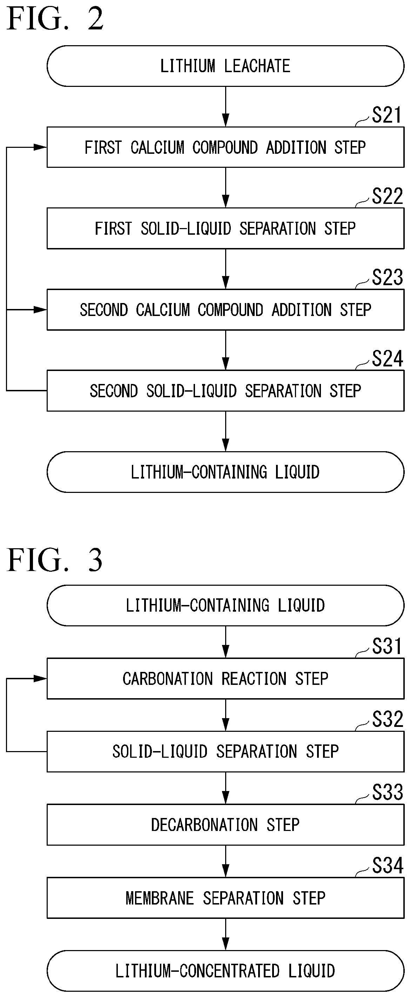

Next, impurities contained in the lithium leachate are removed. In the impurity removal step S02, as shown in FIG. 2, a first calcium compound addition step S21, a first solid-liquid separation step S22, a second calcium compound addition step S23, and a second solid-liquid separation step S24 are provided.

In the first calcium compound addition step S21, a first calcium compound is added to the lithium leachate to generate metal hydroxides and calcium fluoride. These metal hydroxides and calcium fluoride are deposited in the liquid as a solid phase to be precipitated.

The first calcium compound may be added, for example, while the lithium leachate is stirred. The first calcium compound is not particularly limited as long as the first calcium compound is basic, and for example, a solid calcium compound such as calcium carbonate, calcium hydroxide, calcium oxide, or a mixture thereof can be used. A pH of the lithium leachate when the metal hydroxides and calcium fluoride are generated is adjusted to 8.0 or more and 12.0 or less.

In the first solid-liquid separation step S22, the metal hydroxides and calcium fluoride generated in the first calcium compound addition step S21 are removed from the lithium leachate. As a method of removing the metal hydroxides and calcium fluoride, an existing solid-liquid separation method such as a gravity sedimentation separation method, a centrifugal separation method, and a filter cloth filtration method such as a filter press can be appropriately selected and used.

In the second calcium compound addition step S23, a second calcium compound is added to the lithium leachate after the precipitate is removed in the first solid-liquid separation step S22 to precipitate dissolved fluorine. The second calcium compound is not particularly limited as long as it is a basic calcium compound capable of controlling the pH to 5.0 or more and 9.0 or less; for example, a solid calcium compound such as calcium carbonate, calcium hydroxide, calcium oxide, and a mixture thereof can be used.

When generating the precipitate of dissolved fluorine (for example, calcium fluoride), at first, aluminum sulfate is added to make the pH 5.0 or less, and then the pH of the lithium leachate is adjusted to be 5.0 or more and 9.0 or less by adding the second calcium compound. As a result, dissolved fluorine that cannot be completely removed in the first calcium compound addition step S21 and the first solid-liquid separation step S22 can be precipitated as the precipitate of dissolved fluorine. A part of an unreacted second calcium compound precipitates together with the precipitate of dissolved fluorine.

A pH of the lithium leachate in the second calcium compound addition step S23 is more preferably 6.5 or more, and still more preferably 7.0 or more. In addition, the pH of the lithium leachate in the second calcium compound addition step S23 is more preferably 8.0 or less, and still more preferably 7.5 or less.

In the second solid-liquid separation step S24, the precipitate of dissolved fluorine and an unreacted substance of the second calcium compound, which are precipitated in the second calcium compound addition step S23, are removed from the lithium leachate to obtain a lithium-containing liquid. As a method of removing the precipitates, an existing solid-liquid separation method such as a gravity sedimentation separation method, a centrifugal separation method, and a filter cloth filtration method such as a filter press can be appropriately selected and used.

Here, in the impurity removal step S02, in order to reduce chemical costs and the amount of sludge generated, the precipitate of dissolved fluorine and the unreacted substance of the second calcium compound, which are separated and recovered in the second solid-liquid separation step S24, may be used as the first calcium compound to be added in the first calcium compound addition step S21. In addition, as the second calcium compound to be added in the second calcium compound addition step S23, calcium carbonate obtained in a solid-liquid separation step S32 after a carbonation reaction step S31, which will be described later, or calcium carbonate obtained in a first solid-liquid separation step S42 after a first carbonation reaction step S41, which will be described later, may be used. Furthermore, in the second calcium compound addition step S23, solids removed in the second solid-liquid separation step S24 may be used as a seed crystal.

By the above-described steps, a lithium-containing liquid containing lithium can be obtained from the lithium-containing substance. Here, calcium remains in the lithium-containing liquid obtained by the above-described impurity removal step S02. That is, lithium ions and calcium ions coexist in the lithium-containing liquid.

### (Lithium-containing liquid concentration step S03)

Next, the lithium ions contained in the obtained lithium-containing liquid are concentrated to obtain a lithium-concentrated liquid. In the lithium-containing liquid concentration step S03, as shown in FIG. 3, a carbonation reaction step S31, a solid-liquid separation step S32, a decarbonation step S33, and a membrane separation step S34 are provided.

In the carbonation reaction step S31, a soluble carbonate compound (water-soluble carbonate compound) is added to the lithium-containing liquid to precipitate dissolved calcium as calcium carbonate. As the soluble carbonate compound, for example, sodium carbonate or sodium hydrogen carbonate can be used as a solution or a powder. Alternatively, carbon dioxide gas may be directly blown into the lithium-containing liquid. The reaction is preferably performed at 5°C or higher and 50°C or lower, and particularly preferably 10°C or higher and 30°C or lower. When the temperature of the solution is lower than 5°C, it is not preferable since reaction efficiency deteriorates. In addition, when the temperature of the solution is higher than 50°C, precipitation of lithium carbonate is promoted and thus the lithium carbonate also precipitates; and thereby, loss of lithium is caused, which is not preferable.

Here, in the carbonation reaction step S31, it is preferable that an amount of substance (number of moles) of the added soluble carbonate compound and an amount of substance (number of moles) of calcium in the lithium-concentrated liquid is within a range of 1.0 or more and 10.0 or less in terms of stoichiometric ratio (CO₃²⁻/Ca²⁺) (molar ratio).

When the stoichiometric ratio (CO₃²⁻/Ca²⁺) is 1.0 or more, calcium ions can be sufficiently deposited as calcium carbonate. On the other hand, when the stoichiometric ratio (CO₃²⁻/Ca²⁺) is 10.0 or less, deposition of lithium as lithium carbonate can be suppressed.

The stoichiometric ratio (CO₃²⁻/Ca²⁺) in the carbonation reaction step S31 is more preferably 2.0 or more, and still more preferably 3.0 or more. In addition, the stoichiometric ratio (CO₃²⁻/Ca²⁺) in the carbonation reaction step S31 is more preferably 7.0 or less, and still more preferably 5.0 or less.

Further, before adding the soluble carbonate compound, calcium carbonate may be added as seed crystals. In addition, aluminum sulfate may be added together with a polymer flocculant as an agglomeration agent. By adding aluminum sulfate, the deposited calcium carbonate can be agglomerated into larger flocs so as not to remain in the supernatant, and solid-liquid separation can be performed more reliably even when the solid-liquid separation is performed by a gravity sedimentation separation method using a thickener or the like.

A concentration of the aluminum sulfate in the lithium-containing liquid is preferably 0 mg/L or more and 110 mg/L or less, and more preferably 27 mg/L or more and 83 mg/L or less. When the concentration of the aluminum sulfate is less than 27 mg/L, agglomeration is insufficient, which is not preferable. When the concentration of the aluminum sulfate is more than 110 mg/L, the bulk of solids including the deposited calcium carbonate increases, so that the sedimentation facilities must be scaled up in order to perform the solid-liquid separation sufficiently by the gravity sedimentation separation method, which is not preferable.

Examples of the polymer flocculant include DIAFLOC AP825 manufactured by MT AquaPolymer, Inc. and DIAFLOC NP500 manufactured by MT AquaPolymer, Inc. A concentration of the polymer flocculant in the lithium-containing liquid is preferably 1 to 10 ppm. For example, 2 mL of a solution of AP825 having a concentration of 0.05% is added per 1 L of the lithium-containing liquid. In addition, 1 mL of a solution of NP500 having a concentration of 0.1% is added per 1 L of the lithium-containing liquid.

In addition, in the carbonation reaction step S31, it is preferable that a pH of the lithium-containing liquid is within a range of 8.0 or more and 12.0 or less.

By setting the pH of the lithium-containing liquid within the range of 8.0 or more and 12.0 or less, generation of calcium carbonate can be promoted.

The pH of the lithium-containing liquid in the carbonation reaction step S31 is more preferably 9.0 or more, and still more preferably 10.0 or more. In addition, the pH of the lithium-containing liquid in the carbonation reaction step S31 is more preferably 11.0 or less.

In addition, it is preferable that, in the lithium-containing liquid to be treated, a lithium concentration is 1 g/L or more and 15 g/L or less, and a calcium concentration is 10 mg/L or more and 100 mg/L or less.

The lithium concentration in the lithium-containing liquid to be treated is more preferably 1 g/L or more, and still more preferably 5 g/L or more. In addition, the lithium concentration in the lithium-containing liquid to be treated is more preferably 15 g/L or less, and still more preferably 13 g/L or less.

Furthermore, the calcium concentration in the lithium-containing liquid to be treated is more preferably 10 mg/L or more, and still more preferably 20 mg/L or more. In addition, the calcium concentration in the lithium-containing liquid to be treated is preferably 100 mg/L or less, and more preferably 50 mg/L or less.

In the solid-liquid separation step S32, the calcium carbonate generated in the carbonation reaction step S31 is separated from the lithium-containing liquid. As a method of separating the calcium carbonate and the lithium-containing liquid, an existing solid-liquid separation method such as a gravity sedimentation separation method, a centrifugal separation method, and a filter cloth filtration method such as a filter press can be appropriately selected and used.

In the decarbonation step S33, an inorganic acid is added to the lithium-containing liquid separated in the solid-liquid separation step S32 to remove dissolved carbonate compounds from the lithium-containing liquid as carbon dioxide gas.

As the inorganic acid to be added, for example, sulfuric acid, nitric acid, hydrochloric acid, and a mixed acid of two or more selected therefrom can be used.

Here, in the decarbonation step S33, it is preferable that a pH of the lithium-containing liquid is within a range of 3.0 or more and 7.0 or less.

By setting the pH of the lithium-containing liquid to 3.0 or more, it is possible to suppress damage to the reverse osmosis membrane due to an acid in the membrane separation step S34 described later. On the other hand, by setting the pH of the lithium-containing liquid to 7.0 or less, generation of carbon dioxide gas can be promoted. As a result, since the carbonate compounds can be sufficiently removed as carbon dioxide gas from the lithium-containing liquid in the decarbonation step S33, damage to the reverse osmosis membrane due to deposition of calcium carbonate in the membrane separation step S34 can be suppressed.

The pH of the lithium-containing liquid in the decarbonation step S33 is more preferably 3.0 or more, and still more preferably 6.0 or more. In addition, the pH of the lithium-containing liquid in the decarbonation step S33 is more preferably 7.0 or less, and still more preferably 6.5 or less.

In the membrane separation step S34, after the decarbonation step S33, lithium ions in the lithium-containing liquid are concentrated using a reverse osmosis membrane. As the reverse osmosis membrane, for example, a reverse osmosis membrane having a structure such as a hollow fiber type, a spiral type, or a tubular type made of a material such as cellulose acetate can be used. Here, in the lithium-concentrated liquid obtained in the membrane separation step S34, the lithium concentration is preferably 18 g/L or more. In addition, an upper limit value of the lithium concentration in the lithium-concentrated liquid is preferably 35 g/L or less in view of solubility of lithium sulfate.

Through the above-described steps, the lithium-concentrated liquid in which the lithium ions in the lithium-containing liquid are concentrated is produced. The calcium ions may remain in the lithium-concentrated liquid.

### (Lithium carbonate production step S04)

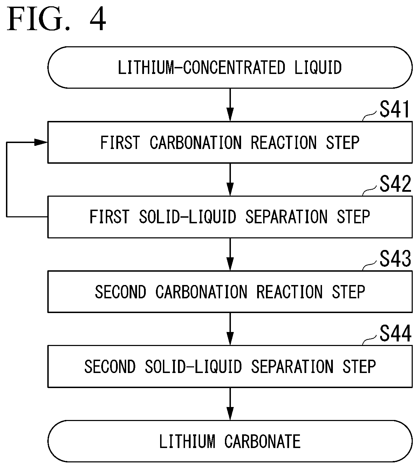

Next, lithium carbonate is produced using the lithium-concentrated liquid containing lithium as a raw material. In the lithium carbonate production step S04, as shown in FIG. 4, a first carbonation reaction step S41, a first solid-liquid separation step S42, a second carbonation reaction step S43, and a second solid-liquid separation step S44 are provided.

In the first carbonation reaction step S41, calcium carbonate is generated by adding a first soluble carbonate compound (first water-soluble carbonate compound) to a lithium-concentrated liquid in which lithium ions and calcium ions coexist, and heating the lithium-concentrated liquid. In the first carbonation reaction step S41, the lithium-concentrated liquid may be heated after the first soluble carbonate compound is added, or the first soluble carbonate compound may be added while the lithium-concentrated liquid is being heated.

As the first soluble carbonate compound, for example, sodium carbonate or sodium hydrogen carbonate can be used in the form of a solution or powder. Alternatively, carbon dioxide gas may be blown in and dissolved so that dissolved calcium reacts therewith.

Here, in the first carbonation reaction step S41, it is preferable that an amount of substance (number of moles) of the added first soluble carbonate compound and an amount of substance (number of moles) of calcium in the lithium-concentrated liquid is within a range of 1.0 or more and 10.0 or less in terms of stoichiometric ratio (CO₃²⁻/Ca²⁺) (molar ratio).

When the stoichiometric ratio (CO₃²⁻/Ca²⁺) is 1.0 or more, calcium ions can be sufficiently deposited as calcium carbonate. On the other hand, when the stoichiometric ratio (CO₃²⁻/Ca²⁺) is 10.0 or less, deposition of lithium as lithium carbonate can be suppressed.

The stoichiometric ratio (CO₃²⁻/Ca²⁺) in the first carbonation reaction step S41 is more preferably 2.0 or more, and still more preferably 3.0 or more. In addition, the stoichiometric ratio (CO₃²⁻/Ca²⁺) in the first carbonation reaction step S41 is more preferably 7.0 or less, and still more preferably 5.0 or less.

In the first carbonation reaction step S41, a pH of the lithium-concentrated liquid is preferably 9.0 or more and 11.0 or less.

By setting the pH of the lithium-concentrated liquid in the first carbonation reaction step S41 to 9.0 or more and 11.0 or less, generation of calcium carbonate can be promoted.

The pH of the lithium-concentrated liquid in the first carbonation reaction step S41 is more preferably 9.5 or more, and still more preferably 10.0 or more.

In the first carbonation reaction step S41, a heating temperature is preferably within a range of 40°C or higher and 95°C or lower.

By setting the heating temperature in the first carbonation reaction step S41 to 40°C or higher, generation of calcium carbonate can be promoted. On the other hand, by setting the heating temperature in the first carbonation reaction step S41 to 95°C or lower, an increase in pressure in a reaction tank can be suppressed, so that the first carbonation reaction step S41 can be stably performed.

The heating temperature in the first carbonation reaction step S41 is more preferably 60°C or higher, and still more preferably 90°C or higher.

In the first solid-liquid separation step S42, the calcium carbonate generated in the first carbonation reaction step S41 is separated from the lithium-concentrated liquid. As a method of separating the calcium carbonate and the lithium-concentrated liquid, an existing solid-liquid separation method such as a gravity sedimentation separation method, a centrifugal separation method, and a filter cloth filtration method such as a filter press can be appropriately selected and used.

In the second carbonation reaction step S43, lithium carbonate is generated by adding a second soluble carbonate compound (second water-soluble carbonate compound) to the lithium-concentrated liquid from which calcium carbonate has been separated, and heating the lithium-concentrated liquid.

As the second soluble carbonate compound, for example, sodium carbonate or sodium hydrogen carbonate may be used. Examples of the form of the second soluble carbonate compound include powder, slurry, and solution. The slurry includes an aqueous solution and particles of the second soluble carbonate compound, and the particles of the second soluble carbonate compound in an amount equal to or more than solubility are in a state of not being dissolved in the aqueous solution. Alternatively, carbon dioxide gas may be blown in and dissolved so that dissolved calcium reacts therewith.

The form of the second soluble carbonate compound is preferably a powder form. As a result, the amount of impurities (SO₄²⁻, Zn, Na, and the like) contained in the generated lithium carbonate can be reduced. When the form of the second soluble carbonate compound is powder, an average particle size thereof is preferably 10 to 100 µm. The average particle size is D50 (median diameter) on a volume basis, which is measured by a laser diffraction scattering method.

Regarding the amount of the second soluble carbonate compound to be added, it is preferable to adjust the amount of the second soluble carbonate compound such that the ratio (CO₃²⁻/2Li⁺) of the amount (number of moles) of carbonate ions (CO₃²⁻) in the second soluble carbonate compound to twice the amount (number of moles) of lithium ions contained in the lithium-concentrated liquid is 1.0 or more and 5.0 or less. As a result, the amount of Ca and Al contained in the generated lithium carbonate can be reduced.

An addition rate of the second soluble carbonate compound (amount added per second relative to 8 g of Li in the lithium-concentrated liquid) is preferably 0.05 to 1 g/s. As a result, the amount of impurities (SO₄²⁻, Zn, Na, and the like) contained in the generated lithium carbonate can be reduced.

When the form of the second soluble carbonate compound is slurry or solution, the addition rate of the second soluble carbonate compound is a value converted in terms of the amount of the second soluble carbonate compound contained in the slurry or solution, and can also be said to be the addition rate of the second soluble carbonate compound contained in the slurry or solution.

In the second carbonation reaction step S43, the lithium-concentrated liquid may be heated after the second soluble carbonate compound is added, or the second soluble carbonate compound may be added while the lithium-concentrated liquid is being heated. However, as described later, it is preferable to heat the lithium-concentrated liquid after the second soluble carbonate compound is added at a temperature of 15°C to 25°C (room temperature).

A heating temperature in the second carbonation reaction step S43 is preferably within a range of 80°C or higher and 95°C or lower.

By setting the heating temperature in the second carbonation reaction step S43 to 80°C or higher, generation of lithium carbonate can be promoted. On the other hand, by setting the heating temperature in the second carbonation reaction step S43 to 95°C or lower, an increase in pressure in the reaction tank can be suppressed, so that the second carbonation reaction step S43 can be stably performed.

The heating temperature in the second carbonation reaction step S43 is more preferably 85°C or higher, and still more preferably 90°C or higher.

When sodium carbonate is added, the lower the temperature of the lithium-concentrated liquid, the more moderate the crystal growth of the generated lithium carbonate becomes, and the amount of impurities contained can be reduced. However, in order to generate lithium carbonate at a high recovery rate, it is necessary to heat the lithium-concentrated liquid. Therefore, at the stage of adding the second soluble carbonate compound to the lithium-concentrated liquid, the temperature of the lithium-concentrated liquid is preferably 15°C to 25°C. After the second soluble carbonate compound is added to the lithium-concentrated liquid, the temperature of the lithium-concentrated liquid is preferably within the range of 80°C or higher and 95°C or lower. As a result, the amount of impurities (SO₄²⁻, Zn, Na, and the like) contained in the generated lithium carbonate can be reduced.

The amount of sulfate ions (SO₄²⁻) contained in the generated lithium carbonate is preferably 1% by mass or less.

Here, in the lithium carbonate production step S04, it is preferable that carbonate compounds containing the calcium carbonate recovered in the first solid-liquid separation step S42 are returned to the first carbonation reaction step S41. In the first carbonation reaction step S41, generation of calcium carbonate can be promoted by using the returned calcium carbonate as a seed crystal. In addition, lithium carbonate generated together with the calcium carbonate can be returned to the first carbonation reaction step S41, and the lithium recovery efficiency can be improved.

In the second solid-liquid separation step S44, the lithium carbonate generated in the second carbonation reaction step S43 is separated from a mother liquor. As a method of separating the lithium carbonate, an existing solid-liquid separation method such as a gravity sedimentation separation method, a centrifugal separation method, and a filter cloth filtration method such as a filter press can be appropriately selected and used.

Through the above-described steps, lithium carbonate is produced. The lithium carbonate may contain calcium in an amount of 400 mass ppm or more.

### (Lithium carbonate purification step S05)

Next, purification of the lithium carbonate is performed in order to further improve the purity of the lithium carbonate obtained by the lithium carbonate production step S04. The method for producing purified lithium carbonate according to the embodiment of the present invention is applied to the lithium carbonate purification step S05.

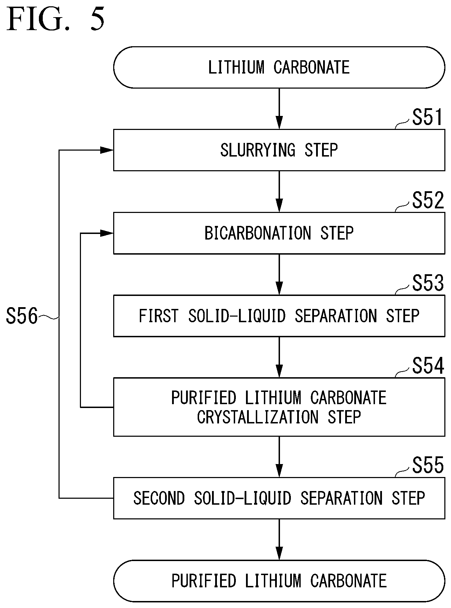

In the method for producing purified lithium carbonate according to the present embodiment (lithium carbonate purification step S05), as shown in FIG. 5, a slurrying step S51, a bicarbonation step S52, a first solid-liquid separation step S53, a purified lithium carbonate crystallization step S54, a second solid-liquid separation step S55, and a mother liquor return step S56 are provided.

In the slurrying step S51, water is added to the above-described lithium carbonate to generate a lithium carbonate slurry. The lithium carbonate contains, for example, calcium in an amount of 400 mass ppm or more. The amount of calcium contained in the lithium carbonate is preferably 5000 mass ppm or less. When the amount of calcium is more than 5000 mass ppm, the amount of residual calcium is large, and clogging is likely to occur when the solids (calcium carbonate) are separated by filtration in the first solid-liquid separation step S53 described later. Here, in the lithium carbonate slurry generated in the slurrying step S51, the concentration of lithium carbonate is preferably within a range of 30 g/L or more and 45 g/L or less.

By setting the concentration of lithium carbonate in the lithium carbonate slurry within the above-described range, it is possible to sufficiently generate lithium bicarbonate in the bicarbonation step S52 described later and to prevent lithium carbonate from remaining; and thereby, it is possible to more efficiently produce purified lithium carbonate.

The concentration of lithium carbonate in the lithium carbonate slurry is more preferably 35 g/L or more, and still more preferably 38 g/L or more. In addition, the concentration of lithium carbonate in the lithium carbonate slurry is more preferably 44 g/L or less, and still more preferably 43 g/L or less.

In the bicarbonation step S52, CO₂ gas is blown into the above-described lithium carbonate slurry to generate soluble lithium bicarbonate; and thereby, a lithium bicarbonate liquid is obtained. That is, as shown in Formula (1), solid lithium carbonate reacts with the carbon dioxide gas to become lithium bicarbonate, and dissolves in water as a solvent, so that a lithium bicarbonate liquid is generated.

Li₂CO₃ + H₂O + CO₂ → 2LiHCO₃ ... (1)

Here, in the bicarbonation step S52, the pH is preferably 7.5 or more and 12 or less.

In the bicarbonation step S52, as the CO₂ gas is blown in, lithium bicarbonate dissolves in the liquid, and the pH of the lithium bicarbonate liquid decreases.

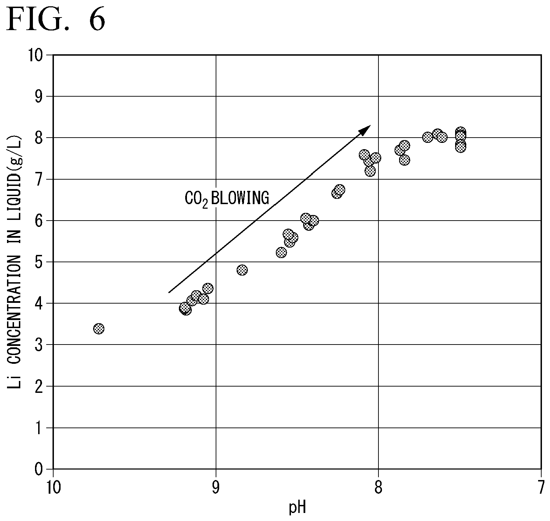

FIG. 6 shows a relationship between the pH of the lithium bicarbonate liquid and the lithium concentration in the liquid. As the pH of the lithium bicarbonate liquid decreases due to blowing-in of CO₂ gas, the lithium concentration in the liquid increases; but when the pH becomes less than 7.5, no increase in the lithium concentration is observed.

Therefore, by setting the pH to 7.5 or more in the bicarbonation step S52, the amount of CO₂ gas used can be reduced, contamination of calcium as calcium bicarbonate in the bicarbonation step S52 can be suppressed, and purified lithium carbonate having higher purity can be produced.

In the bicarbonation step S52, the pH at the time when the blowing-in of CO₂ gas is stopped is preferably 7.5 or more and less than 8.0.

In addition, in the bicarbonation step S52, the liquid temperature is preferably 5°C or higher and 30°C or lower.

In the bicarbonation step, when the CO₂ gas reacts with the lithium carbonate to generate lithium bicarbonate, the liquid temperature rises due to reaction heat. Since the lithium carbonate dissolved in the solution has a property that its solubility decreases as the liquid temperature rises, the lithium carbonate may be deposited when the liquid temperature rises. In this case, calcium carbonate in the lithium carbonate slurry is also entrained and co-deposited, and deposits called scales (calcium carbonate and lithium carbonate) are generated on surfaces of a tank and a stirring blade. By setting the liquid temperature to 30°C or lower in the bicarbonation step S52, generation of scales can be suppressed in the bicarbonation step S52, and the lithium bicarbonate liquid can be obtained stably.

In consideration of energy cost and the capability of the cooling apparatus, the liquid temperature is preferably 5°C or higher.

In the first solid-liquid separation step S53, the lithium bicarbonate liquid generated in the bicarbonation step S52 is separated from remaining solids (calcium carbonate). As a method of separating the lithium bicarbonate liquid and the residual solids, an existing solid-liquid separation method such as a gravity sedimentation separation method, a centrifugal separation method, and a filter cloth filtration method such as a filter press can be appropriately selected and used.

In the purified lithium carbonate crystallization step S54, the lithium bicarbonate liquid after removal of calcium carbonate is heated to decompose lithium bicarbonate and deposit purified lithium carbonate. That is, as shown in Formula (2), by heating and releasing carbon dioxide gas from lithium bicarbonate, lithium carbonate is deposited.

2LiHCO₃ → Li₂CO₃ + H₂O + CO₂ ... (2)

Here, in the purified lithium carbonate crystallization step S54, the liquid temperature is preferably within a range of 85°C or higher and 98°C or lower.

By setting the liquid temperature to 85°C or higher, decomposition of lithium bicarbonate is promoted, and purified lithium carbonate can be efficiently deposited. In addition, by setting the liquid temperature to 98°C or lower, an increase in pressure in the reaction tank is suppressed, and the purified lithium carbonate crystallization step S54 can be stably performed.

The liquid temperature in the purified lithium carbonate crystallization step S54 is more preferably 87°C or higher, and still more preferably 90°C or higher. In addition, the liquid temperature in the purified lithium carbonate crystallization step S54 is more preferably 97°C or lower, still more preferably 96°C or lower, and even more preferably 95°C or lower.

In addition, it is preferable that carbon dioxide gas (CO₂ gas) generated in the purified lithium carbonate crystallization step S54 is used in the bicarbonation step S52. As a result, the amount of CO₂ gas used can be suppressed, and operating cost can be reduced.

In the second solid-liquid separation step S55, the purified lithium carbonate generated in the purified lithium carbonate crystallization step S54 is separated from the mother liquor. As a method of separating the purified lithium carbonate and the mother liquor, an existing solid-liquid separation method such as a gravity sedimentation separation method, a centrifugal separation method, and a filter cloth filtration method such as a filter press can be appropriately selected and used.

In the mother liquor return step S56, the mother liquor from which the purified lithium carbonate has been separated in the second solid-liquid separation step S55 is returned to the slurrying step S51.

Since lithium remains in the mother liquor from which the purified lithium carbonate has been separated in the second solid-liquid separation step S55, by returning the mother liquor to the slurrying step S51, the remaining lithium can be contained in the lithium carbonate slurry serving as a raw material, and lithium recovery efficiency can be improved.

Through the above-described steps, highly pure purified lithium carbonate can be recovered from a lithium-containing substance such as a pulverized product of a discarded lithium-ion battery.

According to the method for producing purified lithium carbonate of the present embodiment, which is applied as the lithium carbonate purification step S05, the method includes the purified lithium carbonate crystallization step S54 of heating the lithium bicarbonate liquid after removal of the calcium carbonate to decompose the lithium bicarbonate and deposit purified lithium carbonate, the second solid-liquid separation step S55 of separating the deposited purified lithium carbonate from a mother liquor, and the mother liquor return step S56 of returning the mother liquor obtained in the second solid-liquid separation step S55 to the slurrying step S51. Therefore, lithium remaining in the mother liquor can be incorporated into the lithium carbonate slurry serving as a raw material, and lithium recovery efficiency can be improved.

In addition, the method includes the bicarbonation step S52 of blowing CO₂ gas into the lithium carbonate slurry to generate soluble lithium bicarbonate and obtain a lithium bicarbonate liquid, and the first solid-liquid separation step S53 of separating calcium carbonate suspended in the lithium bicarbonate liquid. Therefore, calcium can be efficiently removed, and purified lithium carbonate having a high purity can be produced.

In the present embodiment, when the liquid temperature in the purified lithium carbonate crystallization step S54 is set within a range of 85°C or higher and 98°C or lower, lithium bicarbonate can be efficiently decomposed, and deposition of purified lithium carbonate can be promoted.

In the present embodiment, when the concentration of lithium carbonate in the lithium carbonate slurry generated in the slurrying step S51 is within a range of 30 g/L or more and 45 g/L or less, it is possible to sufficiently generate lithium bicarbonate in the bicarbonation step and to prevent lithium carbonate from remaining, and purified lithium carbonate can be more efficiently produced.

In the present embodiment, when the pH in the bicarbonation step S52 is 7.5 or more, calcium contamination in the bicarbonation step S52 can be suppressed, and purified lithium carbonate having a higher purity can be produced. In addition, the amount of CO₂ gas used in the bicarbonation step S52 can be reduced.

In the present embodiment, when the liquid temperature in the bicarbonation step S52 is 30°C or lower, generation of scales in the bicarbonation step S52 can be suppressed, and a lithium bicarbonate liquid can be stably obtained.

In the present embodiment, when the CO₂ gas released from lithium bicarbonate in the purified lithium carbonate crystallization step S54 is used in the bicarbonation step S52, the amount of CO₂ gas used can be suppressed, and the operating cost can be reduced.

Hereinabove, the embodiment of the present invention has been described; however, the present invention is not limited thereto, and can be modified as appropriate without departing from the technical features of the invention. In the present embodiment, as described above, the present embodiment has been described as being applied to the lithium carbonate purification step S05 of the lithium recovery method including the leaching step S01, the impurity removal step S02, the lithium-containing liquid concentration step S03, the lithium carbonate production step S04, and the lithium carbonate purification step S05; however, the present invention is not limited thereto, and is not particularly limited as long as lithium carbonate is purified using lithium carbonate containing 400 mass ppm or more of calcium as a target.

### Examples

Hereinafter, results of confirmation experiments performed to confirm effectiveness of the present invention will be described.

### <Example 1>

45 g of crude lithium carbonate having a chemical composition shown in Table 1 was added to 1 L of water to form a slurry.

While maintaining the liquid temperature of the slurry at a temperature of 15°C to 20°C, the slurry was stirred while CO₂ gas was blown thereinto at a rate (amount) of 0.5 L/min, and lithium carbonate was leached as lithium bicarbonate.

The blowing of CO₂ gas was stopped when the hydrogen ion concentration in the liquid decreased from pH > 8 at the start of leaching to pH = 7.5. The undissolved solid was subjected to solid-liquid separation using a suction filter to obtain an undissolved residue and a lithium bicarbonate liquid. The undissolved residue was dried in a thermostatic dryer at 105°C for 12 hours. A chemical composition of the obtained undissolved residue is shown in Table 2, and a chemical composition of the lithium bicarbonate liquid is shown in Table 3. These chemical compositions were measured by ICP optical emission spectroscopy (ICAP7600 DUO manufactured by THERMO SCIENTIFIC).

1 L of the obtained lithium bicarbonate liquid was held at a temperature of 85°C to 90°C for 30 minutes to produce a slurry of purified lithium carbonate having a high purity from the lithium bicarbonate liquid. In this case, water that had been preheated was appropriately added in an amount corresponding to the water lost by evaporation to maintain the original liquid volume.

The obtained purified lithium carbonate slurry was filtered using a suction filter to obtain purified lithium carbonate and a post-decarbonation filtrate. The purified lithium carbonate was dried in a constant-temperature dryer at 105°C for 12 hours, and a weight after drying was 33.1 g. Purified lithium carbonate was dissolved in a nitric acid aqueous solution having a concentration of 50%, and a chemical composition thereof was measured by ICP optical emission spectroscopy (ICAP7600 DUO manufactured by THERMO SCIENTIFIC). The chemical composition of the post-decarbonation filtrate was also measured by ICP optical emission spectroscopy. A chemical composition of the obtained purified lithium carbonate is shown in Table 4, and a chemical composition of the post-decarbonation filtrate is shown in Table 5.

**[Table 1]**

| Component | Li | Ca | Na | SO₄ |
|---|---|---|---|---|
| Contained amount (mass%) | 18 | 0.34 | 0.044 | 1.2 |

**[Table 2]**

| Component | Li | Ca | Na | SO₄ |
|---|---|---|---|---|
| Contained amount (mass%) | 0.2 | 39.8 | < 0.001 | 2.2 |

**[Table 3]**

| Component | Li | Ca | Na | SO₄ |
|---|---|---|---|---|
| Concentration (g/L) | 8.0 | 0.003 | 0.02 | 0.49 |

**[Table 4]**

| Component | Li | Ca | Na | SO₄ |
|---|---|---|---|---|
| Contained amount (mass%) | 19.0 | 0.014 | < 0.001 | 0.03 |

**[Table 5]**

| Component | Li | Ca | Na | SO₄ |
|---|---|---|---|---|
| Concentration (g/L) | 2.1 | 0.003 | 0.02 | 0.49 |

From Tables 2 and 3, it was confirmed that Li was mainly leached from the crude lithium carbonate as lithium bicarbonate, and Ca remained in the undissolved residue.

In addition, from Tables 3 to 5, it was confirmed that purified lithium carbonate having a high purity was produced from the lithium bicarbonate liquid, and the impurities remained in the post-decarbonation filtrate.

According to the above-described method, it was found that purified lithium carbonate containing fewer impurities could be produced from crude lithium carbonate containing impurities.

### <Comparative Example 1>

The leaching of lithium carbonate as lithium bicarbonate was carried out in the same manner as in Example 1, except that the hydrogen ion concentration at which the CO₂ blowing was stopped was set to pH = 7.0.

### <Comparative Example 2>

The leaching of lithium carbonate as lithium bicarbonate was carried out in the same manner as in Example 1, except that the hydrogen ion concentration at which the CO₂ blowing was stopped was set to pH = 8.0.

Chemical compositions of the undissolved residues obtained by the methods of Comparative Examples 1 and 2 are shown in Table 6; chemical compositions of the lithium bicarbonate liquids are shown in Table 7; and chemical compositions of the purified lithium carbonate finally obtained from the lithium bicarbonate liquids are shown in Table 8.

**[Table 6]**

| | End-point pH | Li (mass%) | Ca (mass%) | Na (mass%) | SO₄ (mass%) |
|---|---|---|---|---|---|
| Example 1 | 7.5 | 0.2 | 39.8 | < 0.001 | 2.2 |
| Comparative Example 1 | 7.0 | 0.1 | 39.7 | < 0.001 | 0.7 |
| Comparative Example 2 | 8.0 | 3.6 | 32.1 | 0.009 | 1.9 |

**[Table 7]**

| | End-point pH | Li (g/L) | Ca (g/L) | Na (g/L) | SO₄ (g/L) |
|---|---|---|---|---|---|
| Example 1 | 7.5 | 8.0 | 0.003 | 0.02 | 0.49 |
| Comparative Example 1 | 7.0 | 8.0 | 0.019 | 0.02 | 0.53 |
| Comparative Example 2 | 8.0 | 6.9 | 0.002 | 0.02 | 0.33 |

**[Table 8]**

| | End-point pH | Li (mass%) | Ca (mass%) | Na (mass%) | SO₄ (mass%) |
|---|---|---|---|---|---|
| Example 1 | 7.5 | 19 | 0.014 | < 0.001 | 0.03 |
| Comparative Example 1 | 7.0 | 18 | 0.056 | < 0.001 | 0.05 |
| Comparative Example 2 | 8.0 | 19 | 0.011 | < 0.001 | 0.02 |

From Tables 7 and 8, when the end-point pH was 7.0 (< 7.5), a large amount of Ca was leached into the lithium bicarbonate liquid, and the Ca concentration in the obtained purified lithium carbonate increased. In addition, the amount of CO₂ consumed also increased accordingly.

On the other hand, from Tables 6 and 7, it was found that, when the end-point pH was 8.0 (> 7.5), the amount of Li remaining in the undissolved residue increased, leading to a decrease in yield.

### <Example 2>

The process was performed in the same manner as in Example 1, except that 1 L of the post-decarbonation filtrate obtained by the method shown in Example 1 was used as a mother liquor, and 33 g of crude lithium carbonate was added thereto to form a slurry.

### <Example 3>

1 L of the post-decarbonation filtrate obtained in Example 2 was used as a mother liquor, and 33 g of crude lithium carbonate was added thereto to form a slurry. Next, purified lithium carbonate was produced by the same operation as in Example 2. 1 L of the obtained post-decarbonation filtrate was used as a mother liquor, and 33 g of crude lithium carbonate was added thereto to form a slurry. Next, purified lithium carbonate was produced by the same operation as in Example 2. The process from the step of slurrying the mother liquor to the step of producing the purified lithium carbonate was repeated a total of 5 times.

Chemical compositions of the post-decarbonation filtrates obtained in Examples 1 to 3 are shown in Table 9, and chemical compositions of the purified lithium carbonate finally obtained from the post-decarbonation filtrates are shown in Table 10.

The Li recovery rate shown in Table 10 was calculated by the following expression. 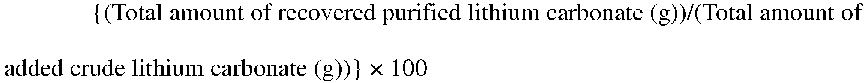 { (Total amount of recovered purified lithium carbonate (g))/(Total amount of added crude lithium carbonate (g))} × 100

**[Table 9]**

| | Number of repetitions | Li (g/L) | Ca (g/L) | Na (g/L) | SO₄ (g/L) |
|---|---|---|---|---|---|
| Example 1 | 0 | 2.1 | 0.003 | 0.02 | 0.49 |
| Example 2 | 1 | 2.0 | 0.004 | 0.04 | 0.77 |
| Example 3 | 5 | 2.3 | 0.004 | 0.08 | 1.60 |

**[Table 10]**

| | Number of repetitions | Li (mass%) | Ca (mass%) | Na (mass%) | SO₄ (mass%) | Li recovery rate (%) |
|---|---|---|---|---|---|---|
| Example 1 | 0 | 19 | 0.014 | < 0.001 | 0.03 | 74 |
| Example 2 | 1 | 19 | 0.015 | 0.001 | 0.04 | 84 |
| Example 3 | 5 | 19 | 0.015 | 0.002 | 0.06 | 93 |

From Tables 9 and 10, it was found that the Li recovery rate improved as the number of reuse cycles of the post-decarbonation filtrate increased.

Specifically, when the number of reuse cycles was 0, the amount of purified lithium carbonate was 33.1 g with respect to 45 g of crude lithium carbonate, and the recovery rate was 74%. In the solution, components corresponding to approximately 12 g of crude lithium carbonate remained. **In** the first and subsequent reuse cycles, substantially the same amount of purified lithium carbonate as the amount (33 g) of newly added crude lithium carbonate was obtained each time. Therefore, the ratio of the total amount of recovered purified lithium carbonate to the total amount of crude lithium carbonate (Li recovery rate) increased as the number of reuse cycles increased.

From the above-described results, it was found that, according to the present invention, purified lithium carbonate could be obtained at a high recovery rate without significantly decreasing the quality of the lithium carbonate obtained by repeatedly using the mother liquor.

### INDUSTRIAL APPLICABILITY

The method for producing purified lithium carbonate according to the present embodiment is suitably applicable to a step of recovering lithium from a lithium-containing substance such as a pulverized product of a lithium-ion battery.

### REFERENCE SIGNS LIST

S05 Lithium carbonate purification step
S51 Slurrying step
S52 Bicarbonation step
S53 First solid-liquid separation step
S54 Purified lithium carbonate crystallization step
S55 Second solid-liquid separation step
S56 Mother liquor return step

## Claims

1. A method for producing purified lithium carbonate, comprising:
a slurrying step of adding water to lithium carbonate containing 400 mass ppm or more of calcium to produce a lithium carbonate slurry;
a bicarbonation step of blowing CO₂ gas into the lithium carbonate slurry to generate soluble lithium bicarbonate and obtain a lithium bicarbonate liquid;
a first solid-liquid separation step of separating calcium carbonate suspended in the lithium bicarbonate liquid;
a purified lithium carbonate crystallization step of heating the lithium bicarbonate liquid after removal of the calcium carbonate, decomposing the lithium bicarbonate, and depositing purified lithium carbonate;
a second solid-liquid separation step of separating the deposited purified lithium carbonate from a mother liquor; and
a mother liquor return step of returning the mother liquor obtained in the second solid-liquid separation step to the slurrying step.

2. The method for producing purified lithium carbonate according to Claim 1,
wherein a liquid temperature in the purified lithium carbonate crystallization step is within a range of 85°C or higher and 98°C or lower.

3. The method for producing purified lithium carbonate according to Claim 1 or 2,
wherein a concentration of the lithium carbonate in the lithium carbonate slurry produced in the slurrying step is within a range of 30 g/L or more and 45 g/L or less.

4. The method for producing purified lithium carbonate according to Claim 1 or 2,
wherein a pH in the bicarbonation step is 7.5 or more.

5. The method for producing purified lithium carbonate according to Claim 1 or 2,
wherein a liquid temperature in the bicarbonation step is 30°C or lower.

6. The method for producing purified lithium carbonate according to Claim 1 or 2,
wherein CO₂ gas released from the lithium bicarbonate in the purified lithium carbonate crystallization step is used in the bicarbonation step.
